# EUROPEAN PATENT SPECIFICATION

(11) **EP 0 521 010 B1**
(45) Date of publication and mention of the grant of the patent: **30.11.1994**
(21) Application number: 91905551.7
(22) Date of filing: 14.03.1991
(51) Int. Cl.: B27L 1/06, A01G 3/08

(54) **PRUNING DEVICE**
ÄSTUNGSVORRICHTUNG
DISPOSITIF D'ELAGAGE

(30) Priority: 16.03.1990 FI 901311
(43) Date of publication of application: 07.01.1993
(73) Proprietor: KOLEHMAINEN, Tenho, SF-83330 Kaatamo (FI)
(72) Inventor: KOLEHMAINEN, Tenho, SF-83330 Kaatamo (FI)
(74) Representative: Siebmanns, Hubertus
(86) International application number: PCT/FI91/00073
(87) International publication number: WO 91/13736

(56) References cited:
- EP-A- 0 117 848
- DE-A- 1 944 204
- FR-A- 2 539 269
- SE-B- 366 200
- SE-B- 438 977
- US-A- 3 373 489

## Description

Objective for the invention is a pruning device for upright pruning of standing trees, to which pruning device belongs a shaft, an at the end of the shaft through an articulated joint fastened support, an on the support fastened, rotatable cutting blade, an on the support fixed, parallel to the cutting blade running cutting support device for leaning the upright pruning device against the tree when cutting the branches as well as a power source coupled with the cutting blade for rotating of the cutting blade.

The branches of the trees are pruned off at their growing stage in order to obtain knotless and better raw-material for sawn timber. The upright pruning of the trees takes nowadays place by sawing with either a manually operated, at the end of a shaft fixed saw or with different power sources equipped chain, circular or back and forth moving saw blades equipped saws. When using the manually operated saws the problem is the low working speed as well as the heaviness of the work, which is caused by the uncomfortable working position and which is still accentuated when pruning branches located very high up. When operating a manual saw also the risk of the branch breaking is big, whereat the stub of the branch is damaged.

With the help of the motor driven pruning devices the branches are easily got pruned, but the problem is the poor maneuverability of the pruning devices and the inaccurate result of the work. With the present pruning devices the branch can be cut off too close to the trunk of the tree, whereat also the trunk of the tree is damaged. When applying the present devices the length of the remaining stub of the branch varies considerably by the case depending on the performer of the pruning operation and the prevailing pruning conditions, whereby no even finishing of the work is achieved.

The objective of the invention is to bring forth a pruning device, with the help of which some disadvantages connected with the present pruning devices are eliminated. In particular the purpose of the invention is to bring about a pruning device, by using of which the trunk of the tree is not damaged and the length of the stub remaining from the branch can be adjusted in advance. Further the aim of the invention is to bring forward a pruning device, which is uncomplicated to its structure and easy to operate.

The objective of the invention is achieved by a pruning device according to claim 1.

The objective of the invention is achieved by a pruning device, in which on at the end of the shaft of the pruning device by articulated joint fastened support is fastened a fixing device, on which the cutting blade is fastened adjustably parallel to the axis of the cutting blade in order to enable adjustment in regard of the distance between the trunk of the tree and the cutting blade. When using the pruning device in accordance with the invention the pruning device is placed at the branch of the tree in such a way, that the cutting support device is against the trunk of the tree and the cutting blade of the pruning device is moved against the branch of the tree. When cutting the branch of the tree the cutting support device is moving along with the cutting blade in accordance with the trunk of the tree, whereat there is a certain distance between the cutting blade and the trunk. The distance between the cutting blade and the cutting support device is adjustable, whereby the length of the remaining stub of the branch is easily determined. The device in accordance with the invention is easy to operate, because it is not necessary to place it so accurately in regard of the branch of the tree as with the known devices must be done. One advantage is also the fact, that the sawing when using the device in accordance with the invention is performed from below upwards, whereat the branch to be cut cannot be torn off. In experiments for instance an about 30 per cent higher speed has been achieved and tha damages on the trees have been around 50 per cent less compared with a hand saw. As the cutting operation is quick, the sticking danger of the saw blade does not exist, as the branch is cut entirely off.

In the following the invention is presented more in detail by referring to the attached drawing, in which
figure 1 presents the operation of a pruning device in accordance with the invention seen from the side schematically presented,
figure 2 presents one application of the pruning head of the pruning device in accordance with the invention seen from the side, and
figure 3 presents the device in accorance with figure 2 seen from another directions.

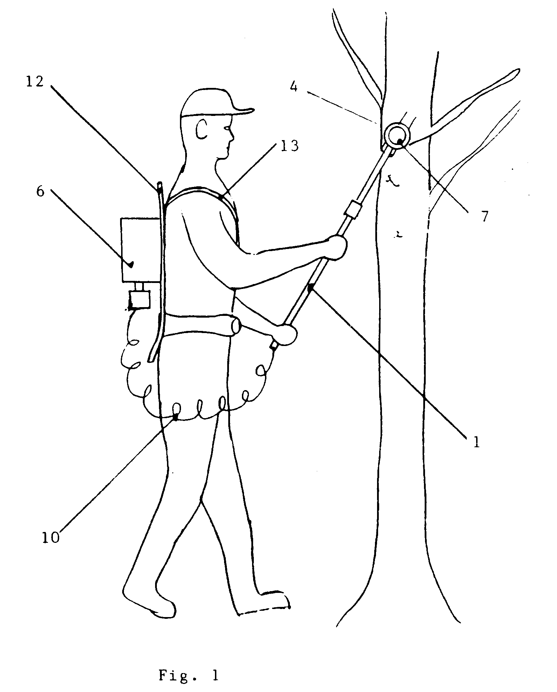

Figure 1 presents a pruning worker, who is equipped with a pruning device in accordance with the invention. To the pruning device belongs a steplessly adjustable shaft 1, at the one end of which is placed a rotatable cutting blade 4. As the power source in this application is a combustion motor-generator combination 6, which is by a power cable 10 connected with the electric motor 7 fastened on the end of the shaft and which motor again for its part is arranged to rotate the cutting blade. The combustion motor-generator combination 6 is fastened on a rack 12 and the rack can be with the on it fastened harness 13 be put on the back of the worker. The power cable 10 is arranged to run protected inside the shaft.

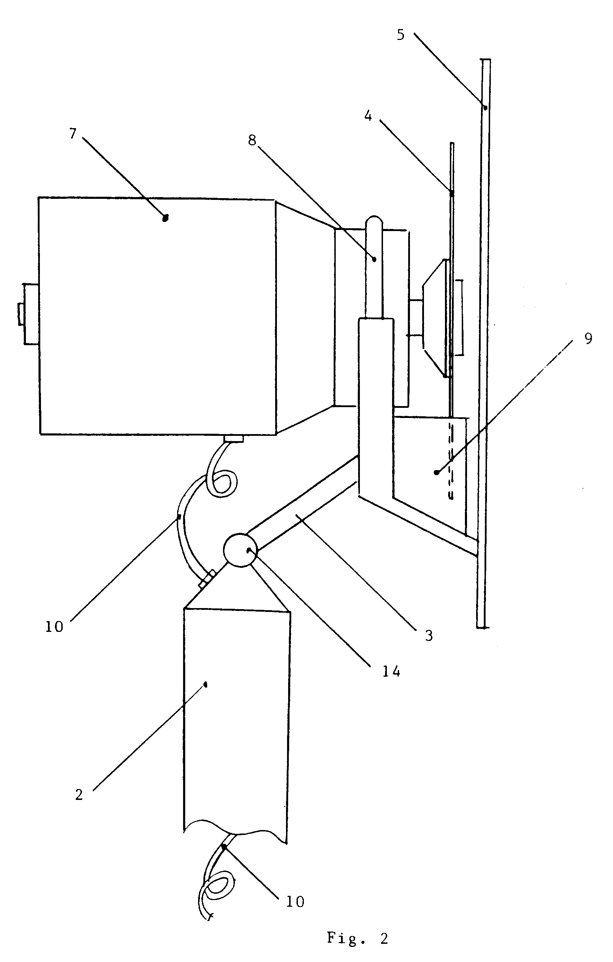

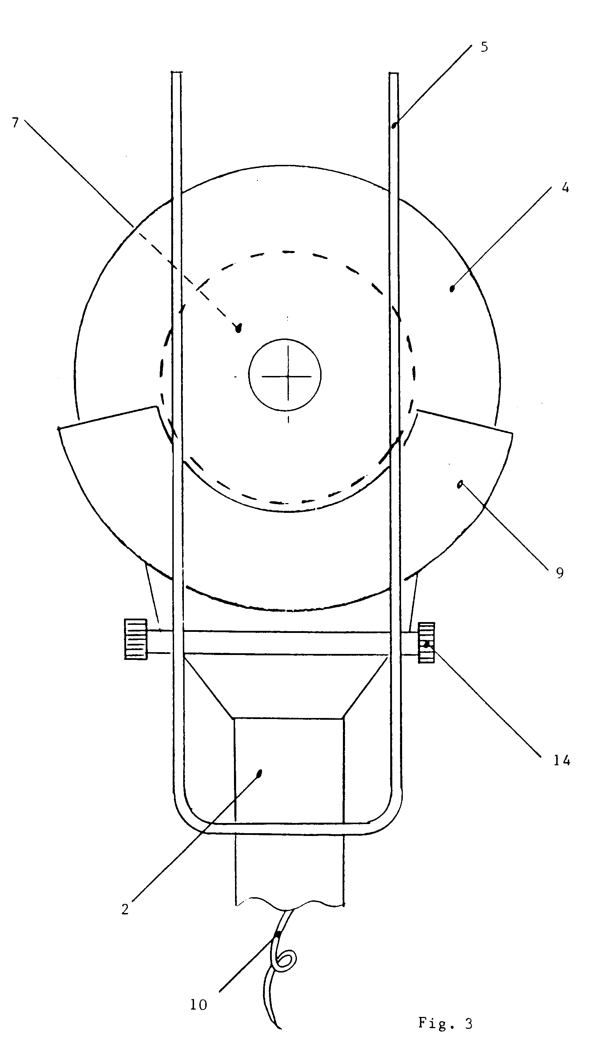

In accordance with figures 2 and 3 on the end 2 of the shaft is with the help of a turning joint 14 fixed articulated the support 3. The electric motor 7 and thereto connected cutting blade 4 are fastened on the support parallel to the axis of the cutting blade adjustably with the help of the fastening device 8. In this application the fastening device is primarily arcuate corresponding to the form of the housing of the electric motor. The fastening device is fixed on its spot by means of retention screws or other as such known fastening devices. On the support is fastened further a parallel to the cutting blade running cutting support device 5, which in this application is formed of two parallel rods. The form and structure of the cutting support device can vary in the different applications of the invention. On the support has additionally at the spot of the cutting blade 4 been fastened the blade protection 9, which is arranged to prevent the falling of the arising sawdust and other debris directly on the worker.

When using the device in accordance with the invention the cutting blade is adjusted to the desired angle with the help of the adjustment joint 14 and the end of the shaft is brought near the branch of the tree in such a manner, that the rods of the cutting support device are on both sides of the branch against the trunk of the tree. The device is moved in the direction of the branch, whereat the cutting blade cuts the branch off and the stub of the branch remains. The length of the stub of the branch can be changed by adjusting the distance between the cutting blade and the rods of the cutting support device. When using the device the trunk of the tree is not damaged and the stub of the branch is of desired length.

The invention is not limited to the presented favourable application, but it can vary within the frames of the inventional conception determined by the claims.

## Claims

1. A pruning device for upright pruning of a tree, to which pruning device belongs a shaft (1), an at the end (2) of the shaft through an articulated joint fastened support (3), an at the support fastened, rotatable cutting blade (4), an at the support fixed, with the cutting blade parallel running cutting support device (5) for leaning of the upright pruning device against the tree when cutting the branches as well as a with the cutting blade connected power source (6, 7) for rotating of the cutting blade, **characterized** in, that on the support (3) is fastened a fastening device (8), on which the cutting blade (4) is fixed adjustably parallel to the axis of the cutting blade for adjusting of the distance between the trunk of the tree and the cutting blade.

2. A pruning device in accordance with claim 1, **characterized** in, that on the support (3) at the spot of the cutting blade (4) a blade protection (9) is fastened.

3. A pruning device in accordance with the claim 1 or 2, **characterized** in, that the cutting support device (5) is formed by rods fixed on the end of the support (3).

## Patentansprüche

1. Ästungsvorrichtung zum Beschneiden eines Baumes in Höhenrichtung, zu welcher Vorrichtung ein Schaft (1) gehört sowie eine am Ende (2) des Schaftes über eine Gelenkverbindung befestigte Stütze (3), ein an letzterer befestigtes, rotierbares Schneideblatt (4), eine an der Stütze befestigte, zum Schneideblatt parallellaufende Schneidenstützvorrichtung (5) zum Anlehnen der aufgerichteten Ästungsvorrichtung gegen den Baum beim Abschneiden der Äste sowie eine mit dem Schneideblatt verbundene Kraftquelle (6, 7) zum Rotieren des Schneideblattes, **dadurch gekennzeichnet**, **dass** an der Stütze (3) eine Befestigungsvorrichtung (8) befestigt ist, an welcher das Schneideblatt (4) einstellbar befestigt ist parallel zur Achse des Schneideblattes zum Einstellen des Abstandes zwischen dem Baumstamm und dem Schneideblatt.

2. Ästungsvorrichtung nach Anspruch 1, **dadurch gekennzeichnet**, **dass** an der Stütze (3) im Bereiche des Schneideblattes (4) ein Blattschutz (9) befestigt ist.

3. Ästungsvorrichtung nach Anspruch 1 oder 2, **dadurch gekennzeichnet**, **dass** die Schneidenstützvorrichtung (5) aus Stangen gebildet ist, die am Ende der Stütze befestigt sind.

## Revendications

1. Dispositif d'élagage pour élaguer sur pied un arbre, comprenant un manche (1), un support (3) fixé à l'extrémité (2) du manche par l'intermédiaire d'une articulation, une lame coupante (4) rotative fixée au support, un dispositif de support (5) de coupe fixé au support parallèlement à la lame coupante pour appuyer le dispositif d'élagage sur pied contre l'arbre pendant l'opération de coupe des branches, ainsi qu'une source de puissance (6, 7) connectée à la lame coupante pour faire tourner la lame coupante, caractérisé en ce qu'un dispositif de fixation (8) est fixé au support (3), la lame coupante étant fixée sur le dispositif de fixation de façon ajustable parallèlement à l'axe de la lame coupante pour ajuster la distance entre le tronc de l'arbre et la lame coupante.

2. Dispositif d'élagage selon la revendication 1, caractérisé en ce qu'une feuille de protection (9) est fixée sur le support (3) à l'endroit de la lame coupante (4).

3. Dispositif d'élagage selon la revendication 1 ou 2, caractérisé en ce que le dispositif de support (5) de coupe est formé par des tiges fixées à l'extrémité du support (3).
